# EUROPÄISCHE PATENTSCHRIFT

(11) **EP 2 564 461 B1**
(45) Veröffentlichungstag und Bekanntmachung des Hinweises auf die Patenterteilung: **02.04.2014**
(21) Anmeldenummer: 11716484.8
(22) Anmeldetag: 19.04.2011
(51) Int. Cl.: H01M 10/39, H01M 2/16

(54) **LITHIUM-SCHWEFEL-BATTERIE**
LITHIUM-SULPHUR BATTERY
BATTERIE LITHIUM-SOUFRE

(30) Priorität: 29.04.2010 DE 102010018731
(43) Veröffentlichungstag der Anmeldung: 06.03.2013
(73) Patentinhaber: Li-Tec Battery GmbH, 01917 Kamenz (DE)
(72) Erfinder: SCHAEFER, Tim, 99768 Harztor (DE)
(74) Vertreter: Wallinger, Michael
(86) Internationale Anmeldenummer: PCT/EP2011/001983
(87) Internationale Veröffentlichungsnummer: WO 2011/134613

(56) Entgegenhaltungen:
- US-A- 5 792 575
- US-A1- 2006 234 126
- US-A1- 2008 280 191

## Beschreibung

Die vorliegende Erfindung betrifft eine Lithium-Schwefel-Batterie.

Sekundärbatterien (wiederaufladbare Batterien) können wegen ihrer hohen Energiedichte und hohen Kapazität als Energiespeicher für mobile Informationsvorrichtungen eingesetzt werden. Sie kommen auch für Werkzeuge, elektrisch betriebene Automobile und für Automobile mit Hybridantrieb zum Einsatz. An diese Batterien werden hohe Anforderungen im Hinblick auf elektrische Kapazität und Energiedichte gestellt. Sie sollen insbesondere im Lade- und Entladezyklus stabil bleiben, d.h. einen möglichst geringen Verlust an elektrischer Kapazität erleiden.

Während mit Lithiumionen-Batterien bereits hohe Lade/Entlade-Zyklen möglich sind, werden diese mit Lithium-Schwefel-Batterien noch nicht erreicht. Eine hohe Lebensdauer wäre aber gerade für diesen Batterietyp wünschenswert, da ihre (theoretische) spezifische Energiedichte wesentlich höher ist als die konventioneller Lithiumionen-Batterien.

Eine Lithium-Schwefel-Batterie basiert auf der elektrochemischen Reaktion zwischen Lithium und Schwefel, beispielsweise 16 Li + S₈ Δ 8Li₂S. Nachteilig ist, dass sich die während der Entladung an der Schwefelelektrode gebildeten Polysulfide Li₂Sₓ (1 ≤ x ≤ 8) im Elektrolyten der Batterie lösen können und auch dort gelöst bleiben. Diese hohe Löslichkeit führt zu einem Verlust an aktiver Elektrodenmasse. Gleichzeitig können Polysulfidanionen zur Lithiummetall-Elektrode wandern, wo sie unlösliche Produkte bilden können. Auch dies beeinträchtigt die Leistungsfähigkeit der Batterie. Insgesamt führt dies zu einer unbefriedigenden niedrigen Lebensdauer im Lade- und Entladezyklus. Dies schränkt zur Zeit den Einsatz von Lithium-Schwefel-Batterien noch ein.

US 6,737,197 B2 offenbart Lithium-Schwefel-Batterien mit festen Elektrolyten wie beispielsweise keramischen Elektrolytseparatoren oder Glaselektrolytseparatoren, die im Wesentlichen keine Flüssigkeit enthalten. Auch ist die Verwendung von polymeren Elektrolyten bekannt, beispielsweise von Polyethern wie Polyethylenoxide. Polymere Elektrolyte können als Gel eingesetzt werden, die organische Flüssigkeiten in einer Menge von etwa 20 Gew.% enthalten. Die Verwendung von Separatormembranen ist ebenfalls möglich. Sie halten einen flüssigen Elektrolyten in kleinen Poren über Kapillarkräfte.

Die deutsche Offenlegungsschrift 23 34 660 offenbart einen elektrischen Akkumulator mit negativer Lithiumelektrode, positiver Schwefelelektrode und einem organischen Elektrolyten. Ein Vlies aus Glasfasern oder im Elektrolyten beständigem Kunststoff, z.B. Polypropylen, wird als Separator vorgeschlagen.

Eine Übersicht über Separatoren, die in Lithiumionen-Batterien verwendbar sind, findet sich in "Lithium-Ion Batteries, Science and Technologies", M. Yoshio, R. J. Brodd, A. Kozawa (Herausgeber), 2009, Springer, Kapitel 20, Seite 367 - 412. Als Separatoren können beispielsweise mikroporöse Filme aus Polypropylen oder Polyethylen verwendet werden (z.B. S. 374, letzter Absatz). Aus faserartigem Material aus beispielsweise Polyethylen, das einer Wärmebehandlung unterzogen wird, können gleichfalls mikroporöse Filme hergestellt werden, die als Separator einsetzbar sind (S. 379, zweiter vollständiger Absatz). Auf Seite 381, 2. Absatz, wird offenbart, dass nicht verwebte Materialien, wie beispielsweise Cellulosefasern, bisher nicht erfolgreich in Lithiumionen-Batterien verwendet werden konnten.

Aufgabe der vorliegenden Erfindung ist es, eine Lithium-Schwefel-Batterie zur Verfügung zu stellen, die in Hinblick auf Lade- und Entladezyklen eine verbesserte Lebensdauer aufweist.

Gegenstand der Erfindung ist eine Lithium-Schwefel-Batterie umfassend
(a) eine erste Elektrode umfassend Lithium;
(b) eine zweite Elektrode umfassend Schwefel und/oder ein Lithiumsulfid;
(c) einen Separator zwischen den Elektroden (a) und (b);
(d) einen Elektrolyten im Separator;
dadurch gekennzeichnet, dass der Separator ein nicht-verwebtes Vlies aus Polymerfasern umfasst, wobei sich im Vlies und/oder einseitig oder beidseitig auf dem Vlies eine poröse anorganische Beschichtung befindet, welche Lithiumionen leiten kann.

Der Begriff *"Lithium-Schwefel-Batterie"* schließt Begriffe wie *"Lithium-Schwefel-Sekundärbatterie", "Lithiumsulfid-Batterie*", *"Lithium-Schwefel-Akkumulator", "Lithium-Schwefel-Zelle"* und dergleichen ein. Dies bedeutet, dass der Begriff *"Lithium-Schwefel-Batterie"* als Sammelbegriff für die im Stand der Technik für diesen Batterietyp gebräuchlichen Begriffe verwendet werden können.

### Elektroden

In einer Ausführungsform umfasst die erste Elektrode (a) metallisches Lithium. Bei Entladung der Batterie ist (a) die negative Elektrode (Anode) und die zweite Elektrode (b) die positive Elektrode (Kathode). Die elektrochemische Reaktion kann wie folgt beschrieben werden:
(a) Anode: Li V Li⁺ + e⁻;
(b) Kathode: S₈ + 2Li⁺ + e⁻ V Li₂S₈; Li₂S₈ V Li₂Sₙ + (8 - n)S).

Vorzugsweise umfasst die positive Elektrode eine Matrix aus Kohlenstoff, in die der Schwefel und/oder das Lithiumsulfid eingebettet sind.

In einer weiteren Ausführungsform umfasst die negative Elektrode eine Lithiumlegierung.

Geeignete Lithiumlegierungen sind vorzugsweise Legierungen von Lithium mit Aluminium und Zinn, beispielsweise LiAl und Li₂₂Sn₅.

Die Lithiumlegierung liegt vorzugsweise eingebettet in einer Matrix aus Kohlenstoff vor. Vorzugsweise umfasst in dieser Ausführungsform auch die positive Elektrode eine Matrix aus Kohlenstoff.

In einer Ausführungsform umfasst die negative Elektrode eine Legierung aus Lithium und Zinn zusammen mit Kohlenstoff. Die elektrochemische Reaktion bei Entladung kann wie folgt beschrieben werden:
(a) Anode: Li₂₂Sn₅ + C V 22Li⁺ + 5Sn/C + 22e⁻;
(b) Kathode: 11 S + C + 22Li⁺ + 22e⁻ ∀ 11 Li₂S/C.

Es ist bekannt, dass Elektroden umfassend metallisches Lithium oder eine Lithiumlegierung die Eigenschaft haben können, sich beim Ladevorgang auszudehnen und beim Entladevorgang zusammenzuziehen. Dies kann zu Leistungsverlust der Batterie führen. Durch Verwendung einer Lithiumlegierung in einer Matrix aus Kohlenstoff ist es möglich, Volumenänderungen der Batterie vorteilhaft auszugleichen.

In einer weiteren Ausführungsform umfasst die negative Elektrode Siliziumdrähte, deren Abmessungen im Nanobereich liegen. Durch den Einsatz von Silizium als Nanodraht kann ebenfalls der unerwünschten Volumenänderung der Anode beim Laden bzw. Entladen entgegengewirkt werden. Negative Elektroden mit Siliziumnanodrähten sind auch aus Lithiumionen-Akkus bekannt.

In einer weiteren Ausführungsform ersetzt das Silizium (in Form von Nanodrähten) den Kohlenstoff in der Anode.

### Separator

Der besagte Separator der erfindungsgemäßen Batterie umfasst Polymerfasern in Form eines Vlieses. Definitionsgemäß sind die Fasern ungewebt. Damit ist das Vlies ungewebt.

Statt des Begriffs *"ungewebt"* wird auch der Begriff *"nicht-verwebt"* verwendet. In der einschlägigen technischen Literatur finden sich auch Begriffe wie *"nonwoven fabrics"* oder *"non-woven material".* Der Begriff *"Vlies"* wird synonym mit dem Begriff "*Vliesstoff"* verwendet.

Der für die Batterie verwendete Separator muss für Lithiumionen durchlässig sein, um den Ionentransport für Lithiumionen zwischen der positiven und der negativen Elektrode zu gewährleisten. Andererseits soll der Separator für Sulfid- und Polysulfidanionen undurchlässig sein. Dies verhindert die Zirkulation derartiger Ionen in der Batterie und deren Diffusion zur Elektrode, die metallisches Lithium oder eine Lithiumlegierung umfasst. Damit wird die Ausbildung unerwünschter schwerlöslicher Sulfide auf dieser Elektrode minimiert oder gar verhindert. Der Separator soll des Weiteren für Elektronen isolierend sein.

Vliese sind aus dem Stand der Technik bekannt und/oder können nach den bekannten Verfahren hergestellt werden, beispielsweise durch Spinnverfahren mit nachfolgender Verfestigung. Vorzugsweise ist das Vlies flexibel und wird in einer Dicke von weniger als 30 µm hergestellt.

Vorzugsweise werden die Polymerfasern ausgewählt aus der Gruppe von Polymeren bestehend aus Polyester, Polyolefin, Polyamid, Polyacrylnitril, Polyimid, Polyetherimid, Polysulfon, Polyamidimid, Polyether, Polyphenylensulfid, Aramid, oder Mischungen aus zwei oder mehreren dieser Polymeren.

Polyester sind beispielsweise Polyethylenterephthalat und Polybutylenterephthalat.

Polyolefine sind beispielsweise Polyethylen oder Polypropylen. Halogen-haltige Polyolefine wie Polytetrafluorethylen, Polyvinylidenfluorid, Polyvinylchlorid sind gleichfalls einsetzbar.

Polyamide sind beispielsweise die bekannten Typen PA 6.6 und PA 6.0, die unter den Markenbezeichnungen Nylon^{®} und Perlon^{®} bekannt sind.

Aramide sind beispielweise meta-Aramid und para-Aramid, welche unter den Markenbezeichnungen Nomex^{®} und Kevlar^{®} bekannt sind.

Polyamidimide sind beispielsweise unter der Markenbezeichnung Kermel^{®} bekannt.

In einer Ausführungsform sind Polymerfasern aus Polypropylen ausgeschlossen.

In einer weiteren Ausführungsform sind Polymerfasern aus Cellulose ausgeschlossen.

Bevorzugte Polymerfasern sind Polymerfasern aus Polyethylenterephthalaten.

Der Separator umfasst ein Vlies, welches ein- oder beidseitig mit einem anorganischen Material beschichtet ist.

Der Begriff *"Beschichtung"* beinhaltet auch, dass sich das ionenleitende anorganische Material nicht nur auf einer Seite oder beiden Seiten des Vlieses befinden kann, sondern auch innerhalb des Vlieses.

Das für die Beschichtung verwendete ionenleitende anorganische Material ist vorzugsweise wenigstens eine Verbindung aus der Gruppe der Oxide, Phosphate, Sulfate, Titanate, Silikate, Aluminosilikate wenigstens eines der Elemente Zirkon, Aluminium oder Lithium.

Das ionenleitende anorganische Material ist vorzugsweise in einem Temperaturbereich von - 40 °C bis 200 °C ionenleitend, d.h. ionenleitend für die Lithium-Ionen.

In einer bevorzugten Ausführungsform umfasst oder besteht das ionenleitende Material aus Zirkonoxid.

In einer Ausführungsform kann ein Separator verwendet werden, welcher aus einem zumindest teilweise stoffdurchlässigen Träger besteht, welcher nicht oder nur schlecht elektronenleitend ist. Dieser Träger ist auf mindestens einer Seite mit einem anorganischen Material beschichtet. Als wenigstens teilweise stoffdurchlässiger Träger wird ein organisches Material verwendet, welches als Vlies, also aus nicht-verwebten Polymerfasern ausgestaltet ist. Das organische Material ist in Form von Polymerfasern ausgestaltet, vorzugsweise Polymerfasern des Polyethylenterephthalats (PET). Das Vlies ist mit einem anorganischen ionenleitenden Material beschichtet, welches vorzugsweise in einem Temperaturbereich von - 40 °C bis 200 °C ionenleitend ist. Das anorganische ionenleitende Material umfasst bevorzugt wenigstens eine Verbindung aus der Gruppe der Oxide, Phosphate, Sulfate, Titanate, Silikate, Aluminosilikate mit wenigstens einem der Elemente Zirkon, Aluminium, Lithium, besonders bevorzugt Zirkonoxid. Bevorzugt weist das anorganische ionenleitende Material Partikel mit einem größten Durchmesser unter 100 nm auf.

Ein solcher Separator wird beispielsweise unter dem Handelsnamen *"Separion*^{®}*"* von der Firma Evonik AG in Deutschland vertrieben.

Verfahren zur Herstellung derartiger Separatoren sind aus dem Stand der Technik bekannt, beispielsweise aus der EP 1 017 476 B1, WO 2004/021477 und WO 2004/021499.

Prinzipiell können zu große Poren und Löcher in Separatoren, die in Sekundärbatterien verwendet werden, zu einem inneren Kurzschluss führen. Die Batterie kann sich dann in einer gefährlichen Reaktion sehr schnell selbst entladen. Hierbei können so große elektrische Ströme auftreten, dass eine geschlossene Batteriezelle im ungünstigsten Fall sogar explodieren kann. Aus diesem Grund kann der Separator auch entscheidend zur Sicherheit bzw. zur fehlenden Sicherheit einer Lithiumhochleistungs- oder Lithiumhochenergie-Batterie beitragen.

Polymerseparatoren unterbinden im Allgemeinen ab einer bestimmten Temperatur (der sogenannten *"Shut-Down-Temperatur",* die bei ca. 120 °C liegt) jeglichen Ladungstransport. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion, die zur Explosion führen kann, zum Erliegen. Wird die Zelle aufgrund äußerer Umstände aber weiter erwärmt, so wird bei ca. 150 bis 180 °C die sogenannte *"Break-Down-Temperatur"* überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die mit einer Explosion der Zelle enden kann, bzw. der entstehende Druck muss durch ein Überdruckventil (eine Berstscheibe) häufig unter Feuererscheinungen abgebaut werden.

Bei dem in der erfindungsgemäßen Batterie verwendeten Separator umfassend ein Vlies aus ungewebten Polymerfasern und die anorganische Beschichtung kann es nur zum Shut-Down (Abschaltung) kommen, wenn durch die hohe Temperatur das Polymergefüge des Trägermaterials schmilzt und in die Poren des anorganischen Materials eindringt und diese dadurch verschließt. Zum Break-Down (Zusammenbruch) kommt es bei dem Separator dagegen nicht, da die anorganischen Partikel dafür sorgen, dass ein völliges Schmelzen des Separators nicht eintreten kann. Somit ist sichergestellt, dass es keine Betriebszustände gibt, in denen ein großflächiger Kurzschluss entstehen kann.

Durch die Art des eingesetzten Vlieses, welches eine besonders gut geeignete Kombination aus Dicke und Porosität aufweist, können Separatoren hergestellt werden, die den Anforderungen an Separatoren in Hochleistungsbatterien, insbesondere Lithium-Hochleistungsbatterien gerecht werden können. Durch die gleichzeitige Verwendung von in ihrer Partikelgröße genau abgestimmten Oxid-Partikeln zur Herstellung der porösen (keramischen) Beschichtung wird eine besonders hohe Porosität des fertigen Separators erreicht, wobei die Poren immer noch genügend klein sind, um ein unerwünschtes Durchwachsen von *"Lithium-Whiskern"* durch den Separator zu verhindern.

Auf Grund der hohen Porosität des Separators muss allerdings dafür Sorge getragen werden, dass in den Poren kein oder ein möglichst geringer Totraum entsteht.

Die für die erfindungsgemäße Batterie einsetzbaren Separatoren haben auch den Vorteil, dass sich an den anorganischen Oberflächen des Separatormaterials die Anionen des Leitsalzes teilweise anlagern, was zu einer Verbesserung der Dissoziation und somit zu einer besseren Ionenleitfähigkeit im Hochstrombereich führt.

Der für die erfindungsgemäße Batterie verwendbare Separator, umfassend ein flexibles Vlies mit einer auf und in diesem Vlies befindlichen porösen anorganischen Beschichtung, wobei das Material des Vlieses ausgewählt ist aus (ungewebten) Polymerfasern, zeichnet sich auch dadurch aus, dass das Vlies eine Dicke von weniger als 30 µm, eine Porosität von mehr als 50 %, vorzugsweise von 50 bis 97 % und eine Porenradienverteilung aufweist, bei der mindestens 50 % der Poren einen Porenradius von 75 bis 150 µm aufweisen.

Besonders bevorzugt umfasst der Separator ein Vlies, welches eine Dicke von 5 bis 30 µm, vorzugsweise eine Dicke von 10 bis 20 µm aufweist. Besonders wichtig ist auch eine möglichst homogene Porenradienverteilung im Vlies wie oben angegeben. Eine noch homogenere Porenradienverteilung im Vlies führt in Verbindung mit optimal abgestimmten Oxid-Partikeln bestimmter Größe zu einer optimierten Porosität des Separators.

Die Dicke des Substrates hat einen großen Einfluss auf die Eigenschaften des Separators, da zum einen die Flexibilität aber auch der Flächenwiderstand des mit Elektrolyt getränkten Separators von der Dicke des Substrates abhängig ist. Durch die geringe Dicke wird ein besonders geringer elektrischer Widerstand des Separators in der Anwendung mit einem Elektrolyten erzielt. Der Separator selbst weist einen sehr hohen elektrischen Widerstand auf, da er selbst isolierende Eigenschaften gegenüber Elektronen aufweisen muss. Zudem erlauben dünnere Separatoren eine erhöhte Packungsdichte in einem Batteriestapel, so dass man im gleichen Volumen eine größere Energiemenge speichern kann.

Vorzugsweise weist das nicht-verwebte Vlies eine Porosität von 60 bis 90 %, besonders bevorzugt von 70 bis 90 % auf. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Die große Porosität des Substrates ermöglicht auch eine höhere Porosität des Separators, weshalb eine höhere Aufnahme an Elektrolyten mit dem Separator erzielt werden kann.

Damit ein Separator mit isolierenden Eigenschaften erhalten werden kann, weist dieser als Polymerfasern für das nicht-verwebte Vlies vorzugsweise nicht elektrisch leitfähige Fasern von Polymeren auf wie oben definiert. Vorzugsweise sind diese ausgewählt aus den oben aufgeführten Polymeren, vorzugsweise Polyacrylnitril, Polyester, wie z. B. Polyethylenterephthalat und/oder Polyolefin, wie z. B. Polypropylen oder Polyethylen, oder Mischungen solcher Polyolefine.

Die Polymerfasern der Vliese weisen vorzugsweise einen Durchmesser von 0,1 bis 10 µm, besonders bevorzugt von 1 bis 4 µm auf.

Besonders bevorzugte flexible Vliese weisen ein Flächengewicht von kleiner 20 g/m², vorzugsweise von 5 bis 10 g/m² auf.

Vorzugsweise weist der Separator auf und im nicht-verwebten Vlies eine poröse, elektrisch isolierende, keramische Beschichtung auf. Vorzugsweise weist die auf und in dem Vlies befindliche poröse anorganische Beschichtung Oxid-Partikel der Elemente Li, Al, Si und/oder Zr mit einer mittleren Partikelgröße von 0,5 bis 7 µm, bevorzugt von 1 bis 5 µm und ganz besonders bevorzugt von 1,5 bis 3 µm auf. Besonders bevorzugt weist der Separator eine auf und in dem Vlies befindliche poröse anorganische Beschichtung auf, die Aluminiumoxid- Partikel mit einer mittleren Partikelgröße von 0,5 bis 7 µm, bevorzugt von 1 bis 5 µm und ganz besonders bevorzugt von 1,5 bis 3 µm aufweist, die mit einem Oxid der Elemente Zr oder Si verklebt sind. Um eine möglichst hohe Porosität zu erzielen, liegen bevorzugt mehr als 50 Gew.-% und besonders bevorzugt mehr als 80 Gew.-% aller Partikel in den oben genannten Grenzen der mittleren Partikelgröße. Wie bereits oben beschrieben beträgt die maximale Partikelgröße vorzugsweise 1/3 bis 1/5 und besonders bevorzugt kleiner oder gleich 1/10 der Dicke des eingesetzten Vlieses.

Vorzugsweise weist der Separator aus Vlies und keramischer Beschichtung eine Porosität von 30 bis 80 %, bevorzugt von 40 bis 75 % und besonders bevorzugt von 45 bis 70 % auf. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen.

Die für die erfindungsgemäße Batterie verwendeten Separatoren zeichnen sich auch dadurch aus, dass sie eine Reißfestigkeit von mindestens 1 N/cm, vorzugsweise von mindestens 3 N/cm und ganz besonders bevorzugt von 3 bis 10 N/cm aufweisen können. Die Separatoren lassen sich vorzugsweise ohne Beschädigung bis auf jeden Radius bis herab zu 100 mm, vorzugsweise bis herab zu 50 mm und ganz besonders bevorzugt bis herab zu 1 mm biegen. Dies macht den Separator auch einsatzfähig in Kombination mit gewickelten Elektroden.

Die hohe Reißfestigkeit und die gute Biegbarkeit des Separators haben auch den Vorteil, dass beim Laden und Entladen einer Batterie auftretende Veränderungen der Geometrien der Elektroden durch den Separator mitgemacht werden können, ohne dass dieser beschädigt wird.

In einer Ausführungsform ist es möglich, den Separator so zu gestalten, dass er die Form eines konkaven oder konvexen Schwamms oder Kissens oder die Form von Drähten oder eines Filzes aufweist. Diese Ausführungsform ist gut geeignet, Volumenveränderungen in der Batterie auszugleichen. Entsprechende Herstellverfahren sind dem Fachmann bekannt.

In einer weiteren Ausführungsform umfasst das im Separator verwendete Polymervlies ein weiteres Polymer. Vorzugsweise ist dieses Polymer zwischen dem Separator und der Elektrode (a) und/oder dem Separator und der Elektrode (b) angeordnet, vorzugsweise in Form einer Polymerschicht.

In einer Ausführungsform ist der Separator mit diesem Polymer einseitig oder beidseitig beschichtet.

Besagtes Polymer kann in Form einer porösen Membran, d.h. als Folie, oder in Form eines Vlieses vorliegen, vorzugsweise in Form eines Vlieses aus nicht verwebten Polymerfasern.

Diese Polymeren werden vorzugsweise ausgewählt aus der Gruppe bestehend aus Polyester, Polyolefin, Polyacrylnitril, Polycarbonat, Polysulfon, Polyethersulfon, Polyvinylidenfluorid, Polystyrol, Polyetherimid.

Vorzugsweise ist das weitere Polymer ein Polyolefin. Bevorzugte Polyolefine sind Polyethylen und Polypropylen.

Vorzugsweise ist der Separator mit einer oder mehreren Schichten des weiteren Polymers, vorzugsweise des Polyolefins, das vorzugsweise gleichfalls als Vlies, also als nicht verwebte Polymerfasern vorliegt, beschichtet.

Vorzugsweise wird im Separator ein Vlies aus Polyethylenterephthalat verwendet, das mit einer oder mehreren Schichten des weiteren Polymers, vorzugsweise des Polyolefins, das vorzugsweise gleichfalls als Vlies, also als nicht verwebte Polymerfasern vorliegt, beschichtet ist.

Besonders bevorzugt ist ein Separator des oben beschriebenen Separion-Typs, der mit einer oder mehreren Schichten des weiteren Polymers, vorzugsweise des Polyolefins, das vorzugsweise gleichfalls als Vlies, also als nicht verwebte Polymerfasern vorliegt, beschichtet ist.

Die Beschichtung mit dem weiteren Polymeren, vorzugsweise mit dem Polyolefin, kann durch Verklebung, Laminierung, durch eine chemische Reaktion, durch Verschweißung oder durch eine mechanische Verbindung erzielt werden. Derartige Polymerverbunde sowie Verfahren zu ihrer Herstellung sind aus der EP 1 852 926 bekannt.

Vorzugsweise werden die im Separator einsetzbaren Vliese aus Nanofasern der verwendeten Polymeren gefertigt, wodurch Vliese gebildet werden, die eine hohe Porosität unter Ausbildung geringer Porendurchmesser aufweisen. Damit kann sowohl die Gefahr von Kurzschlussreaktionen weiter vermindert werden wie auch die Gefahr der unerwünschten Diffusion von Polysulfidanionen durch den Separator hindurch.

Vorzugsweise sind die Faserdurchmesser des Polyethylenterephthalatvlieses größer als die Faserdurchmesser des weiteren Polymervlieses, vorzugsweise des Polyolefinvlieses, mit dem der Separator einseitig oder beidseitig beschichtet ist.

Vorzugsweise weist das aus Polyethylenterephthalat gefertigte Vlies dann einen höheren Porendurchmesser auf als das Vlies, das aus dem weiteren Polymeren gefertigt ist.

Die Verwendung eines Polyolefins zusätzlich zum Polyethylenterephthalat gewährleistet eine erhöhte Sicherheit der elektrochemischen Zelle, da bei unerwünschter oder zu starker Erwärmung der Zelle sich die Poren des Polyolefins zusammenziehen und der Ladungstransport durch den Separator hindurch reduziert bzw. beendet wird. Sollte sich die Temperatur der elektrochemischen Zelle soweit erhöhen, dass das Polyolefin zu schmelzen beginnt, wirkt das Polyethylenterephthalat dem Zusammenschmelzen des Separators und damit einer unkontrollierten Zerstörung der elektrochemischen Zelle wirksam entgegen.

### Elektrolyt

Der im Lithium-Schwefel-Akkumulator einsetzbare Elektrolyt ist ein nichtwässeriger Elektrolyt. Er umfasst ein organisches Lösungsmittel und ein Leitsalz.

Die einsetzbaren organischen Lösungsmittel sind unter den im Akkumulator herrschenden Reaktionsbedingungen vorzugsweise inert. Sie werden vorzugsweise ausgewählt aus Ethylencarbonat, Propylencarbonat, Butylencarbonat, Dimethylcarbonat, Diethylcarbonat, Ethylmethylcarbonat, Methylpropylcarbonat, Butylmethylcarbonat, Ethylpropylcarbonat, Dipropylcarbonat, Cyclopentanone, Sulfolane, Dimethylsufoxid, 3-Methyl-1,3-oxazolidine-2-on, γ-Butyrolacton, 1,2-Diethoxymethan, Tetrahydrofuran, 2-Methyltetrahydrofuran, 1,3-Dioxolan, Methylacetat, Ethylacetat, Nitromethan, 1,3-Propansulton, und Mischungen aus zwei oder mehreren dieser Lösungsmittel.

Das Leitsalz ist vorzugsweise ausgewählt aus LiPF₆, LiBF₄, LiClO₄, LiAsF₆, LiCF₃SO₃, LiN(CF₃SO₂)₂, LiC(CF₃SO₂)₃, LiSO₃CₓF₂ₓ₊₁, LiN(SO₂CₓF2ₓ₊₁)₂ oder LiC(SO₂CₓF₂ₓ₊₁)₃ mit 0 ≤ x ≤ 8, Li[(C₂O₄)₂B], und Mischungen von zwei oder mehreren dieser Salze.

Vorzugsweise werden dem Elektrolyten der Lithium-Schwefel-Batterie Polysulfidanionen zugesetzt, beispielsweise in Form von Li₂S₃, Li₂S₄, Li₂S₆, Li₂S₈. In einer Ausführungsform ist die Menge an zugesetztem Polysulfid derart, dass der Elektrolyt mit Polysulfid gesättigt ist. Damit kann dem Schwund der negativen Elektrode an Schwefel entgegengewirkt werden. Der Zusatz an Polysulfid erfolgt vorzugsweise vor Inbetriebnahme der Batterie.

Der Elektrolyt kann weitere Hilfsstoffe umfassen, die in Elektrolyten für Lithiumionen-Batterien üblicherweise Anwendung finden. Beispielsweise sind dies Radikalfänger wie Biphenyl, flammhemmende Zusätze wie organische Phosphorsäureester oder Hexamethylphosphoramid, oder Säurefänger wie Amine. Additive wie Vinylencarbonat, die die Bildung der "solid electrolyte interface"-Schicht (SEI) auf den Elektroden, vorzugsweise Kohlenstoff-haltigen Elektroden, beeinflussen können, sind ebenfalls einsetzbar.

### Herstellung der Batterie

Die Lithium-Schwefel-Batterie kann aus den Komponenten (a) bis (d) nach Prinzipien aufgebaut werden, wie sie im Stand der Technik bekannt sind und für die Herstellung von Lithium-Schwefel-Batterien üblicherweise verwendet werden.

Beispielsweise kann zur Herstellung der positiven Elektrode Schwefel mit Kohlenstoff, beispielsweise in Form von Graphit, in einem Bindemittel angerieben werden. Die erhaltene Masse kann dann beispielsweise auf Aluminiumfolie aufgepresst werden. Zur Herstellung der negativen Elektrode kann beispielsweise Lithiumfolie oder eine Folie mit Lithiumlegierung auf einen geeigneten Träger aufgepresst werden. Der Separator wird mit Elektrolyt getränkt und die Elektroden auf den getränkten Separator laminiert. Es wird eine bereits geladene Batterie erhalten.

In einer weiteren Ausführungsform ist es auch möglich, die Batterie im entladenen Zustand herzustellen. Dazu wird eine positive Elektrode hergestellt, die ein Komposit aus einem Lithiumsulfid und Kohlenstoff enthält. Die negative Elektrode umfasst den Träger für das Lithiummetall, ist aber frei an Lithiummetall oder Lithiumlegierung. Der Separator wird mit Elektrolyt getränkt und die Elektroden auf den getränkten Separator laminiert. Beim Laden der Batterie werden die Elektroden in die Schwefelelektrode und die Elektrode mit Lithiummetall oder Lithiumlegierung überführt.

### Verwendung

Die erfindungsgemäße Lithium-Schwefel-Batterie kann zur Energieversorgung für mobile Informationsvorrichtungen, Werkzeuge, elektrisch betriebene Automobile und für Automobile mit Hybridantrieb verwendet werden

## Patentansprüche

1. Lithium-Schwefel-Batterie umfassend
(a) eine erste Elektrode umfassend Lithium;
(b) eine zweite Elektrode umfassend Schwefel und/oder ein Lithiumsulfid;
(c) einen Separator zwischen den Elektroden (a) und (b);
(d) einen Elektrolyten im Separator;
**dadurch gekennzeichnet, dass** der Separator ein nicht-verwebtes Vlies aus Polymerfasern umfasst, wobei sich im Vlies und/oder einseitig oder beidseitig auf dem Vlies eine poröse anorganische Beschichtung befindet, welche Lithiumionen leiten kann.

2. Lithium-Schwefel-Batterie nach Anspruch 1, **dadurch gekennzeichnet, dass** in (a) Lithiummetall oder eine Lithiumlegierung vorliegt.

3. Lithium-Schwefel-Batterie nach Anspruch 1 oder 2, **dadurch gekennzeichnet, dass** eine oder beide der Elektroden Kohlenstoff umfasst/umfassen.

4. Lithium-Schwefel-Batterie nach einem der vorstehenden Ansprüche, **dadurch gekennzeichnet, dass** die Polymerfasern ausgewählt sind aus der Gruppe von Polymeren bestehend aus Polyester, Polyolefin, Polyamid, Polyacrylnitril, Polyimid, Polyetherimid, Polysulfon, Polyamidimid, Polyether, Polyphenylensulfid, Aramid, oder Mischungen aus zwei oder mehreren dieser Polymeren.

5. Lithium-Schwefel-Batterie nach einem der vorstehenden Ansprüche, **dadurch gekennzeichnet, dass** die Polymerfasern ein Polyethylenterephthalat umfassen.

6. Lithium-Schwefel-Batterie nach einem der vorstehenden Ansprüche, **dadurch gekennzeichnet, dass** der Separator aus einem zumindest teilweise stoffdurchlässigen Träger besteht, welcher nicht oder nur schlecht elektronenleitend ist, wobei der Träger auf mindestens einer Seite mit einem anorganischen Material beschichtet ist, wobei als wenigstens teilweise stoffdurchlässiger Träger ein organisches Material verwendet wird, welches als nicht-verwebtes Vlies ausgestaltet ist, wobei das organische Material in Form von Polymerfasern ausgestaltet ist, vorzugsweise Polymerfasern des Polyethylenterephthalats (PET), wobei das Vlies mit einem anorganischen ionen leitenden Material beschichtet ist, welches vorzugsweise in einem Temperaturbereich von - 40 °C bis 200 °C ionenleitend ist, wobei das anorganische ionenleitende Material bevorzugt wenigstens eine Verbindung aus der Gruppe der Oxide, Phosphate, Sulfate, Titanate, Silikate, Aluminosilikate mit wenigstens einem der Elemente Zirkon, Aluminium, Lithium, besonders bevorzugt Zirkonoxid umfasst, wobei bevorzugt das anorganische ionenleitende Material Partikel mit einem größten Durchmesser unter 100 nm aufweist.

7. Lithium-Schwefel-Batterie nach einem der vorstehenden Ansprüche, **dadurch gekennzeichnet, dass** der Separator die Form eines konkaven oder konvexen Schwamms oder Kissens oder die Form von Drähten oder eines Filzes aufweist.

8. Lithium-Schwefel-Batterie nach einem der vorstehenden Ansprüche, **dadurch gekennzeichnet, dass** sich zwischen dem Separator (c) und der ersten Elektrode (a) und/oder zwischen dem Separator (c) und der zweiten Elektrode (b) eine Polymerschicht befindet, die als Folie oder als Vlies ausgebildet ist.

9. Lithium-Schwefel-Batterie nach Anspruch 8, **dadurch gekennzeichnet, dass** die Polymerschicht ein Polyolefin umfasst.

10. Lithium-Schwefel-Batterie nach einem der vorstehenden Ansprüche, **dadurch gekennzeichnet, dass** der Elektrolyt ein organisches Lösungsmittel und ein Leitsalz umfasst.

11. Lithium-Schwefel-Batterie nach Anspruch 10, **dadurch gekennzeichnet, dass** das organische Lösungsmittel ausgewählt ist aus Ethylencarbonat, Propylencarbonat, Butylencarbonat, Dimethylcarbonat, Diethylcarbonat, Ethylmethylcarbonat, Methylpropylcarbonat, Butylmethylcarbonat, Ethylpropylcarbonat, Dipropylcarbonat, Cyclopentanone, Sulfolane, Dimethylsufoxid, 3-Methyl-1,3-oxazolidine-2-on, γ-Butyrolacton, 1,2-Diethoxymethan, Tetrahydrofuran, 2-Methyltetrahydrofuran, 1,3-Dioxolan, Methylacetat, Ethylacetat, Nitromethan, 1,3-Propansulton, und Mischungen aus zwei oder mehreren dieser Lösungsmittel.

12. Lithium-Schwefel-Batterie nach Anspruch 10 oder 11, **dadurch gekennzeichnet, dass** das Leitsalz ausgewählt ist aus LiPF₆, LiBF₄, LiClO₄, LiAsF₆, LiCF₃SO₃, LiN(CF₃SO₂)₂, LiC(CF₃SO₂)₃, LiSO₃CₓF₂ₓ₊₁, LiN(SO₂CₓF₂ₓ₊₁)₂ oder LiC(SO₂CₓF₂ₓ₊₁)₃ mit 0 ≤ x ≤ 8, Li[(C₂O₄)₂B], und Mischungen von zwei oder mehreren dieser Salze.

13. Lithium-Schwefel-Batterie nach einem der vorstehenden Ansprüche, **dadurch gekennzeichnet, dass** der Elektrolyt ein Polysulfid umfasst, welches vor Inbetriebnahme der Batterie dem Elektrolyten zugesetzt wird.

14. Verwendung einer Lithium-Schwefel-Batterie nach einem der vorstehenden Ansprüche zur Energieversorgung für mobile Informationsvorrichtungen, Werkzeuge, elektrisch betriebene Automobile und für Automobile mit Hybridantrieb.

## Claims

1. A lithium-sulfur battery comprising:
(a) a first electrode comprising lithium;
(b) a second electrode comprising sulfur and/or a lithium sulfide;
(c) a separator between the electrodes (a) and (b);
(d) an electrolyte in the separator,
**characterized in that** the separator comprises a nonwoven fabric of polymer fibers, wherein a porous inorganic coating able to conduct lithium ions is provided in the nonwoven and/or on one or both sides of the nonwoven.

2. The lithium-sulfur battery according to claim 1, **characterized in that** lithium metal or a lithium alloy is present in (a).

3. The lithium-sulfur battery according to claim 1 or 2, **characterized in that** one or both of the electrodes comprise(s) carbon.

4. The lithium-sulfur battery according to any one of the preceding claims, **characterized in that** the polymer fibers are selected from among the group of polymers consisting of polyester, polyolefin, polyamide, polyacrylonitrile, polyimide, polyetherimide, polysulfone, polyamide-imide, polyether, polyphenylene sulfide and aramid, or mixtures of two or more of these polymers.

5. The lithium-sulfur battery according to any one of the preceding claims, **characterized in that** the polymer fibers comprise a polyethylene terephthalate.

6. The lithium-sulfur battery according to any one of the preceding claims, **characterized in that** the separator consists of a substrate which is at least partially permeable to material which does not or only poorly conducts electrons, wherein the substrate is coated on at least one side with an inorganic material, wherein an organic material formed as a nonwoven fabric is used as the at least partially material-permeable substrate, wherein the organic material is in the form of polymer fibers, preferably polymer fibers of polyethylene terephthalate (PET), wherein the nonwoven is coated with an inorganic ion-conducting material which preferably conducts ions in a temperature range of from -40°C to 200°C, wherein the inorganic ion-conducting material preferably comprises at least one compound from the group consisting of oxides, phosphates, sulfates, titanates, silicates and aluminosilicates of at least one of the elements zirconium, aluminium and lithium, particularly preferentially zirconium oxide, wherein preferably the inorganic ion-conducting material comprises particles with a maximum diameter of less than 100 nm.

7. The lithium-sulfur battery according to any one of the preceding claims, **characterized in that** the separator is in the form of a concave or convex sponge or cushion or in the form of wires or a felt.

8. The lithium-sulfur battery according to any one of the preceding claims, **characterized in that** a polymer layer designed as a film or as a nonwoven is situated between the separator (c) and the first electrode (a) and/or between the separator (c) and the second electrode (b).

9. The lithium-sulfur battery according to claim 8, **characterized in that** the polymer layer comprises a polyolefin.

10. The lithium-sulfur battery according to any one of the preceding claims, **characterized in that** the electrolyte comprises an organic solvent and a conducting salt.

11. The lithium-sulfur battery according to claim 10, **characterized in that** the organic solvent is selected from among ethylene carbonate, propylene carbonate, butylene carbonate, dimethyl carbonate, diethyl carbonate, ethylmethyl carbonate, methylpropyl carbonate, butylmethyl carbonate, ethylpropyl carbonate, dipropyl carbonate, cyclopentanone, sulfolane, dimethyl sulfoxide, 3-methyl-1,3-oxazolidine-2-one, γ-butyrolactone, 1,2-diethoxymethane, tetrahydrofuran, 2-methyltetrahydrofuran, 1,3-dioxolan, methyl acetate, ethyl acetate, nitromethane, 1,3-propanesultone and mixtures of two or more of these solvents.

12. The lithium-sulfur battery according to claim 10 or 11, **characterized in that** the conducting salt is selected from among LiPF₆, LiBF₄, LiClO₄, LiAsF₆, LiCF₃SO₃, LiN(CF₃SO₂)₂, LiC(CF₃SO₂)₃, LiSO₃CₓF₂ₓ₊₁, LiN(SO₂CₓF₂ₓ₊₁)₂ or LiC(SO₂CₓF₂ₓ₊₁)₃ with 0 ≤ x ≤ 8, Li[(C₂0₄)₂B] and mixtures of two or more of these salts.

13. The lithium-sulfur battery according to any one of the preceding claims, **characterized in that** the electrolyte comprises a polysulfide added to said electrolyte before the battery is put into operation.

14. The use of a lithium-sulfur battery according to any one of the preceding claims for supplying energy to mobile information apparatus, tools, electrically operated automobiles and automobiles with hybrid drives.

## Revendications

1. Batterie lithium-soufre, comprenant
(a) une première électrode comprenant du lithium ;
(b) une deuxième électrode comprenant du soufre et/ou un sulfure de lithium ;
(c) un séparateur entre les électrodes (a) et (b) ;
(d) un électrolyte dans le séparateur ;
**caractérisée en ce que** le séparateur comprend un tissu non tissé de fibres de polymère, un revêtement poreux inorganique qui peut conduire des ions lithium se trouvant dans le tissu et/ou d'un côté ou des deux côtés sur le tissu.

2. Batterie lithium-soufre selon la revendication 1, **caractérisée en ce que**, dans (a) se trouve du métal lithium ou un alliage de lithium.

3. Batterie lithium-soufre selon la revendication 1 ou 2, **caractérisée en ce que** l'une des électrodes ou les deux comprend/comprennent du carbone.

4. Batterie lithium-soufre selon l'une des revendications précédentes, **caractérisée en ce que** les fibres de polymère sont choisies dans le groupe de polymères consistant en polyester, polyoléfine, polyamide, polyacrylonitrile, polyimide, polyétherimide, polysulfone, polyamide-imide, polyéther, sulfure de polyphénylène, aramide ou des mélanges de deux ou de plusieurs de ces polymères.

5. Batterie lithium-soufre selon l'une des revendications précédentes, **caractérisée en ce que** les fibres de polymère comprennent un polyéthylène-téréphtalate.

6. Batterie lithium-soufre selon l'une des revendications précédentes, **caractérisée en ce que** le séparateur consiste en un support au moins partiellement perméable aux substances, qui n'est pas ou n'est que faiblement conducteur d'électrons, le support étant revêtu au moins d'un côté par un matériau inorganique, un matériau organique, qui est conçu comme un tissu non tissé, étant utilisé comme support au moins partiellement perméable aux substances, le matériau organique étant conçu sous la forme de fibres de polymère, de préférence, des fibres de polymère de polyéthylène-téréphtalate (PET), le tissu étant revêtu d'un matériau inorganique conducteur d'ions qui est conducteur d'ions de préférence dans une plage de températures de -40 °C à 200 °C, le matériau inorganique conducteur d'ions comprenant de préférence au moins un composé du groupe des oxydes, phosphates, sulfates, titanates, silicates, aluminosilicates comportant au moins l'un des éléments zirconium, aluminium, lithium, de manière particulièrement préférée, l'oxyde de zirconium, le matériau inorganique conducteur d'ions présentant de préférence des particules ayant un diamètre maximal inférieur à 100 nm.

7. Batterie lithium-soufre selon l'une des revendications précédentes, **caractérisée en ce que** le séparateur présente la forme d'une éponge ou d'un coussin concave ou convexe ou la forme de fils ou d'un feutre.

8. Batterie lithium-soufre selon l'une des revendications précédentes, **caractérisée en ce que**, entre le séparateur (c) et la première électrode (a) et/ou entre le séparateur (c) et la deuxième électrode (b) se trouve une couche de polymère qui est conçue comme une feuille ou comme un tissu.

9. Batterie lithium-soufre selon la revendication 8, **caractérisée en ce que** la couche de polymère comprend une polyoléfine.

10. Batterie lithium-soufre selon l'une des revendications précédentes, **caractérisée en ce que** l'électrolyte comprend un solvant organique et un sel conducteur.

11. Batterie lithium-soufre selon la revendication 10, **caractérisée en ce que** le solvant organique est choisi parmi le carbonate d'éthylène, le carbonate de propylène, le carbonate de butylène, le carbonate de diméthyle, le carbonate de diéthyle, le carbonate d'éthylméthyle, le carbonate de méthylpropyle, le carbonate de butylméthyle, le carbonate d'éthylpropyle, le carbonate de dipropyle, la cyclopentanone, le sulfolane, le diméthylsulfoxyde, la 3-méthyl-1,3-oxazolidine-2-one, la γ-butyrolactone, le 1,2-diéthoxyméthane, le tétrahydrofurane, le 2-méthyltétrahydrofurane, le 1,3-dioxolane, l'acétate de méthyle, l'acétate d'éthyle, le nitrométhane, la 1,3-propanesulfone et des mélanges de deux ou plusieurs de ces solvants.

12. Batterie lithium-soufre selon la revendication 10 ou 11, **caractérisée en ce que** le sel conducteur est choisi parmi les LiPF₆, LiBF₄, LiClO₄, LiAsF₆, LiCF₃SO₃, LiN(CF3SO₂)₂, LiC(CF₃SO₂)₃, LiSO₃CₓF₂ₓ₊₁, LiN( SO₂CₓF₂ₓ₊₁)₂ ou LiC(SO₂CF₂ₓ₊₁) où 0 ≤ x ≤8, Li [(C₂O₄)₂B] et des mélanges de deux ou de plusieurs de ces sels.

13. Batterie lithium-soufre selon l'une des revendications précédentes, **caractérisée en ce que** l'électrolyte comprend un polysulfure qui est ajouté à l'électrolyte avant la mise en service de la batterie.

14. Utilisation d'une batterie lithium-soufre selon l'une des revendications précédentes, pour l'alimentation en énergie pour des dispositifs d'information mobile, des outils, des automobiles à propulsion électrique ou des automobiles à propulsion hybride.
